# EUROPEAN PATENT APPLICATION

(11) **EP 4 711 119 A2**
(43) Date of publication of application: **18.03.2026**
(21) Application number: 25201999.7
(22) Date of filing: 12.09.2025
(51) Int. Cl.: B29C 70/22, B29C 70/24, B29C 70/44, B29D 99/00, F01D 5/28, F04D 29/32, B29L 31/08

(54) **HYBRID COMPOSITE ARCHITECTURE FOR COMPOSITE FAN BLADE IMPACT ROBUSTNESS**

(30) Priority: 12.09.2024 US 202418884028
(71) Applicant: RTX Corporation, Farmington, CT 06032 (US)
(72) Inventor: SALISBURY, George A., East Hampton, 06424 (US); FINNIGAN, Peter, East Hampton, 06424 (US); FRASCA, Andrew P., Canton, 06019 (US); LI, Xuetao, South Glastonbury, 06073 (US); MOK, Ji Won, Rocky Hill, 06067 (US); TATTON, Royce E., Shelley, 83274 (US); YEH, Po-Ching, Woodbridge, 06525 (US)
(74) Representative: Dehns

(57) **Abstract**

A composite fan blade (58) includes a plurality of uniplies (74) stacked together to define the blade (58); and at least one braided (78) or woven (76) ply between two plies of the plurality of uniplies (74). Z-pins (96) can be incorporated into the fan blade (58. A method for making a composite fan blade is also disclosed.

## Description

### FIELD

The present disclosure relates to a composite architecture useful for composite fan blades and the like.

### BACKGROUND

Fans for gas turbine engines are being considered in ever greater sizes so that a greater bypass ratio can be implemented. Along with the greater size of the fan comes a greater risk of damage to the fan due to the greater area exposed to, for example only, bird strikes. Further, as the size of the fan increases, so does the weight of the fan.

Composite fan blades can be used to reduce the weight of the fan as compared to fans made of typical alloys or the like. Such composite fan blades for gas turbine engines have been fabricated with several manufacturing processes, including, for example, the following:
Uniply pre-impregnated tape that is hand laid up and autoclave cured.

3D woven preform and resin transfer molding (RTM), then cure.

Automated Fiber Placement (AFP) of pre-impregnated slit tape and then autoclave cure.

Each method of fabrication has advantages from technical, producibility, cost, mechanical performance, etc., points of view.

One of the primary FAA (Federal Aviation Agency) requirements for fan blades, and one that can be difficult to achieve, is satisfying bird ingestion requirements. Bird ingestion requirements include one or more birds of different sizes based on fan diameter, run-on requirements, and thrust loss requirements. Bird ingestion is the most difficult requirement to meet given other constraints on the fan blade, such as cost, weight, aerodynamic performance, etc. Thus, manufacturing techniques and fan architectures are critical in achieving these conflicting goals and requirements.

Thus, more robust composite fan blades remain of interest, especially with respect to bird ingestion events.

### SUMMARY OF THE DISCLOSURE

In one aspect of the invention, a composite fan blade is provided. The composite fan blade comprises a plurality of uniplies (plies or layers with all fibers in a single direction) stacked together to define the blade, and at least one braided or woven ply between two plies of the plurality of uniplies.

In any of the aspects or embodiments described above and herein, the at least one braided or woven-ply may comprise a braided ply having a triaxial architecture.

In any of the aspects or embodiments described above and herein, the at least one braided or woven ply may comprise a woven fabric.

In any of the aspects or embodiments described above and herein, the at least one braided or woven ply may be or comprise a prepreg braided or woven ply.

In any of the aspects or embodiments described above and herein, the at least one braided or woven ply may comprise a fiber material selected from the group consisting of carbon fiber material, fiberglass material, para-aramid synthetic fiber and combinations thereof.

In any of the aspects or embodiments described above and herein, a matrix material may be in (disposed in, dispersed within or otherwise comprised by) at least some of the uniplies and the at least one braided or woven ply. In any of the aspects or embodiments described above and herein, the matrix material may be selected from the group consisting of epoxy, bismaleimide and polyimide.

In any of the aspects or embodiments described above and herein, the at least one braided or woven ply may comprise at least two adjacent braided or woven plies. In any of the aspects or embodiments described above and herein, the at least two adjacent braided or woven plies may be nested (with one another).

In any of the aspects or embodiments described above and herein, the composite fan blade may further comprise carbon nano tubes between at least two of the uniplies.

In any of the aspects or embodiments described above and herein, the carbon nano tubes may comprise a portion of a or the matrix material dispersed through the uniplies.

In any of the aspects or embodiments described above and herein, the fan blade may further comprise at least one z-pin extending across at least two of the uniplies.

In any of the aspects or embodiments described above and herein, the at least one z-pin may extend substantially normal to a surface of the composite fan blade.

In any of the aspects or embodiments described above and herein, the at least one z-pin may comprise carbon.

In another aspect of the invention, a method for making a composite fan blade is provided. The method comprises the steps of laying up a plurality of uniplies to define the composite fan blade, and applying at least one braided or woven ply between two uniplies of the plurality of uniplies.

In any of the aspects or embodiments described above and herein, the at least one braided or woven ply may comprise a braided ply having a triaxial architecture.

In any of the aspects or embodiments described above and herein, the at least one braided or woven ply may be other comprise a prepreg braided or woven ply.

In any of the aspects or embodiments described above and herein, the at least one braided or woven ply may comprise a fiber material selected from the group consisting of carbon fiber material, fiberglass material, para-aramid synthetic fiber and combinations thereof.

In any of the aspects or embodiments described above and herein, a matrix material is in (disposed in, dispersed within or otherwise comprised by) at least some of the uniplies and the at least one braided or woven ply. In any of the aspects or embodiments described above and herein, the matrix material may be selected from the group consisting of epoxy, bismaleimide and polyimide.

In any of the aspects or embodiments described above and herein, the at least one braided or woven ply may comprise at least two adjacent braided or woven plies. In any of the aspects or embodiments described above and herein, the at least two adjacent braided or woven plies may be nested (with one another).

In any of the aspects or embodiments described above and herein, the method may further comprise a step of incorporating carbon nano tubes between at least two of the uniplies.

In any of the aspects or embodiments described above and herein, the carbon nano tubes may comprise a portion of a or the matrix material dispersed through the uniplies.

In any of the aspects or embodiments described above and herein, the method may include a step of incorporating at least one z-pin to extend across at least two of the uniplies.

In any of the aspects or embodiments described above and herein, the at least one z-pin may extend substantially normal to a surface of the composite fan blade.

In any of the aspects or embodiments described above and herein, the at least one z-pin may comprise carbon.

The foregoing features and elements may be combined in various combinations without exclusivity, unless expressly indicated otherwise. These features and elements, as well as the operation thereof, will become more apparent in light of the following description and the accompanying drawings. It should be appreciated that the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 is a schematic cross section of a gas turbine engine.
FIG. 2 is a schematic view of a non-limiting example of a fan blade for use in the gas turbine engine shown in FIG. 1.
FIG. 3 is a schematic view of a typical uniply prepreg layup for a composite fan blade.
FIG. 4 illustrates substitution of a braided or woven fabric at locations in the architecture of FIG. 3, as well as reinforcement with carbon nano tubes.
FIG. 5 further illustrates the addition of z-pins along with the substitutions of FIG. 4.
FIG. 6 illustrates a fan blade including areas where z-pinning can be locally employed to focus an areas that need reinforcement against bird strikes and the like.
FIG. 7 is a schematic side illustration of an airfoil portion of a fan blade having a preform.
FIG. 8 is a sectional view taken along the lines A-A of FIG. 7.
FIG. 9 is a sectional view taken along the lines B-B of FIG. 7.
FIG. 10 is an enlarged portion of FIG. 9.
FIG. 11 is a schematic side illustration of a fan blade having a preform and z-pinning.
FIG. 12 is a sectional view taken along the lines A-A of FIG. 11.
FIG. 13 is a sectional view taken along the lines B-B of FIG. 11.
FIG. 14 is an enlarged portion of FIG. 13.

### DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination. Additionally, any reference to without contact (or similar phrases) may also include reduced contact or minimal contact. It should also be understood that unless specifically stated otherwise, references to "a", "an", or "the" may include one or more than one and that reference to an item in the singular may also include the item in the plural. Further, all ranges may include upper and lower values and all ranges and ratio limits disclosed herein may be combined.

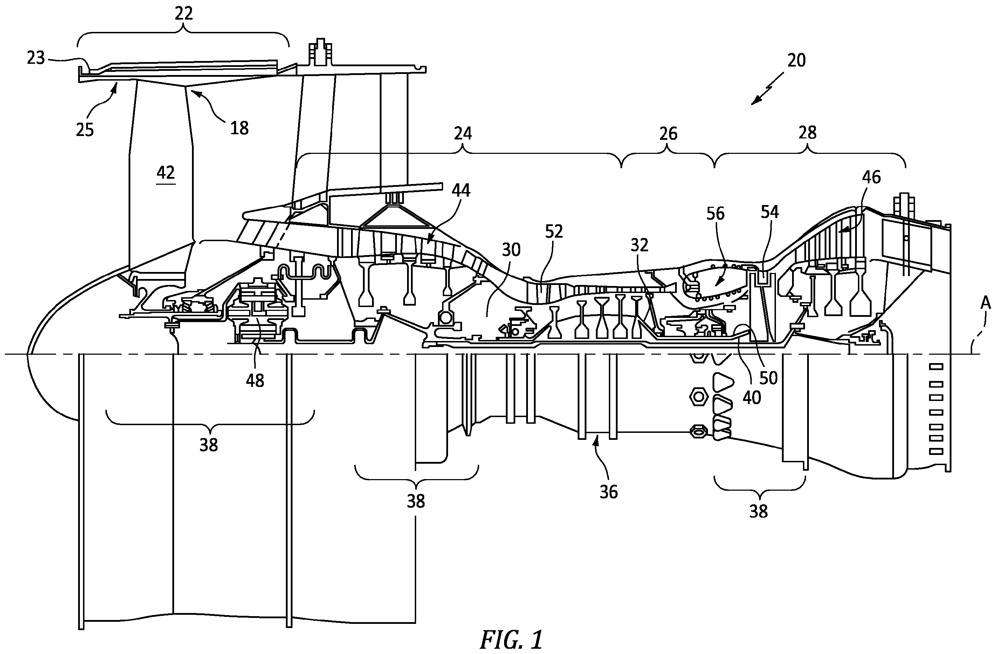

FIG. 1 schematically illustrates a gas turbine engine 20. The gas turbine engine 20 as disclosed herein has a two-spool turbofan that generally incorporates a fan section 22 with fan casing 23 and liner 25, a compressor section 24, a combustor section 26 and a turbine section 28. The fan section 22 drives air along a bypass flow path while the compressor section 24 drives air along a core flow path for compression and communication into the combustor section 26 then expansion through the turbine section 28. Although depicted as a turbofan in the disclosed non limiting embodiment, it should be appreciated that the concepts described herein are not limited only thereto.

The engine 20 generally includes a low spool 30 and a high spool 32 mounted for rotation around an engine central longitudinal axis A relative to an engine static structure 36 via several bearing compartments 38. The low spool 30 generally includes an inner shaft 40 that interconnects a fan 42, a low-pressure compressor 44 ("LPC") and a low-pressure turbine 46 ("LPT"). The inner shaft 40 drives the fan 42 directly or through a geared architecture 48 to drive the fan 42 at a lower speed than the low spool 30. The high spool 32 includes an outer shaft 50 that interconnects a high-pressure compressor 52 ("HPC") and high-pressure turbine 54 ("HPT"). A combustor 56 is arranged between the HPC 52 and the HPT 54. The inner shaft 40 and the outer shaft 50 are concentric and rotate around the engine central longitudinal axis A which is collinear with their longitudinal axes.

Core airflow is compressed by the LPC 44 then the HPC 52, mixed with fuel and burned in the combustor 56, then expanded over the HPT 54 and the LPT 46. The turbines 46, 54 rotationally drive the respective low spool 30 and high spool 32 in response to the expansion. The main engine shafts 40, 50 are supported at a plurality of points by the bearing compartments 38. It should be appreciated that various bearing compartments 38 at various locations may alternatively or additionally be provided.

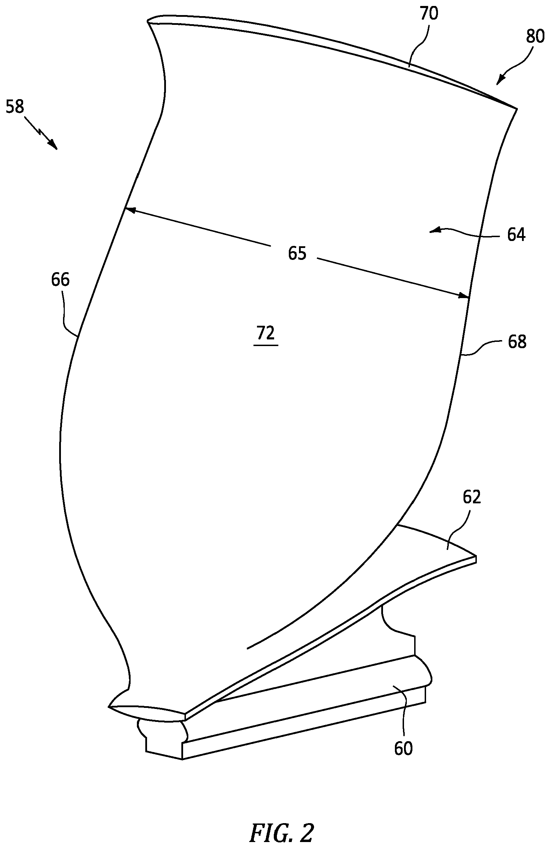

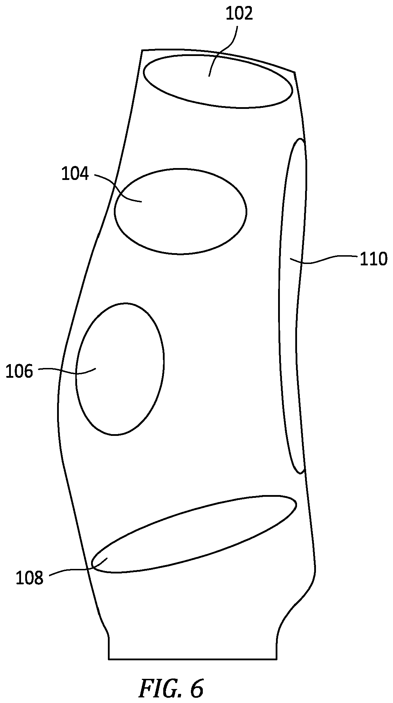

Referring also to Fig. 2, a non-limiting example of a fan blade 58 which can be used in fan section 22 is illustrated. It should be noted that the schematic illustration includes a platform of the fan blade as is the case with some possible embodiments of fan blades, but the present disclosure is not limited to any specific design of fan blade, and in fact FIGS. 6-13 illustrate fan blades that do not include the platform section, which is instead a separate component. Fan section 22 includes a plurality of circumferentially spaced fan blades 58 which may be made of a high strength, low weight material such as an aluminum alloy, titanium alloy, composite material or combinations thereof. Although a single fan stage typical of a high bypass gas turbofan engine architecture is illustrated and described in the disclosed embodiments, other stages which have other blades inclusive but not limited to fan blades, high pressure compressor blades and low-pressure compressor blades may also benefit from the subject matter disclosed herein.

Each fan blade 58 generally includes an innermost root portion 60, an intermediate platform portion 62 (which is frequently a separate component), and an outermost airfoil portion 64. In one form, the root portion 60 defines an attachment such as an inverted fir tree, bulb, or dovetail, so the fan blade 58 is slidably received in a complimentary configured recess provided in a fan rotor. The platform portion 62 generally separates the root portion 60 and the airfoil portion 64 to define an inner boundary of the air flow path. The airfoil portion 64 defines a blade chord 65 between a leading edge 66, which may include various forward and/or aft sweep configurations, and a trailing edge 68. A concave pressure side 70 and a convex suction side 72 are defined between the leading edge 66 and the trailing edge 68.

In one non-limiting configuration, fan blade 58 can be a uniply organic matrix composite (OMC) or prepreg composite. Such a composite typically involves fibers such as carbon, fiberglass, para-aramid synthetic fiber or the like, and combinations thereof, with a matrix of epoxy, bismaleimide (BMI) or polyimide, or the like, as non-limiting examples. In one non-limiting configuration, the fibers can be carbon, fiberglass, or para-aramid synthetic fiber. In another non-limiting configuration, the matrix can be epoxy, bismaleimide (BMI) or polyimide. Such configurations allow for meaningful weight reduction in the fan blade while still maintaining desirable properties of the fan blade.

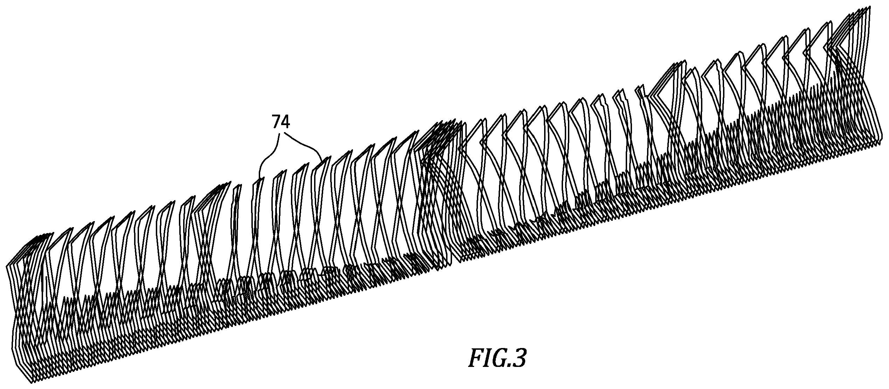

One method for making the airfoil portion of a fan blade involves layup of the uniply OMC as is shown in FIG. 3. FIG. 3 shows a layup defining an outer surface for half of the airfoil portion of a blade. The layup can be for the pressure or suction surface of the fan blade, and the entire fan blade would be laid up, including for example all features of a blade as shown in FIG. 6, as one non-limiting example.

The layup involves the placement, either manually or by machine, of a plurality of layers or plies of the fiber material, and insertion or application of the matrix component into the plies which, after curing, defines the intended overall shape of the blade. Matrix can be already in the plies, layers or fibers, that is, prepreg fibers or plies can be used, or matrix can be applied using resin transfer molding (RTM) or the like. Once the layup with resin or matrix is complete, curing can be performed via autoclave or the like to produce the final organic matrix composite article, for example a fan blade. Temperatures and timing for curing will depend upon the materials used and the final intended product.

In one non-limiting configuration, the plies are uniplies, that is, plies with all fibers in a single direction. FIG. 3 shows placement or layup of a plurality of uniplies 74 into the desired form, either by placement on a mold or on a preform which can remain a part of the component. It will be appreciated that extra layers of uniply can be used in areas of the fan blade that are to have greater thickness, for example, and/or which define the dovetail and transition region of the blade as shown in FIG. 6.

Still referring to FIG. 3, the plies can be applied to a mold to define a desired shape and contour, or similarly applied to a preform. Many layers of plies are typically applied to define the intended structure, in this case the entire fan blade. The plies can be cut to a desired shape before application, and then placed manually. Alternatively, a layup of plies can be fabricated with an Automated Fiber Placement (AFP) process wherein fibers, or pre-impregnated slit tape, can be positioned during the layup in an automated manner. Uniplies can each be placed in a predetermined orientation angle. In this regard, uniplies generally have a single general direction of extension of the fibers, and this direction or fiber axis can generally be desirable to arrange at an angle relative to the fiber axis of an adjacent ply. These respective orientations can provide the ultimate structure with different mechanical properties in different directions which can be desirable, again depending upon the final product being fabricated.

FIG. 3 shows such a typical uniply layup as discussed above. It has been found with this type of structure that it can still be challenging to satisfy bird ingestion requirements, that is, for the blade to be able to sustain ingestion of one or more birds of different sizes, and meet run-on requirements, and thrust loss requirements. Bird ingestion can be a difficult requirement to meet given other constraints on the fan blade such as cost, weight, aerodynamic performance and the like.

A number of non-limiting configurations are disclosed herein that help to provide a desired combination of properties well suited to steady state stresses, low and high cycle fatigue stresses, frequency placement, bird impact and the like.

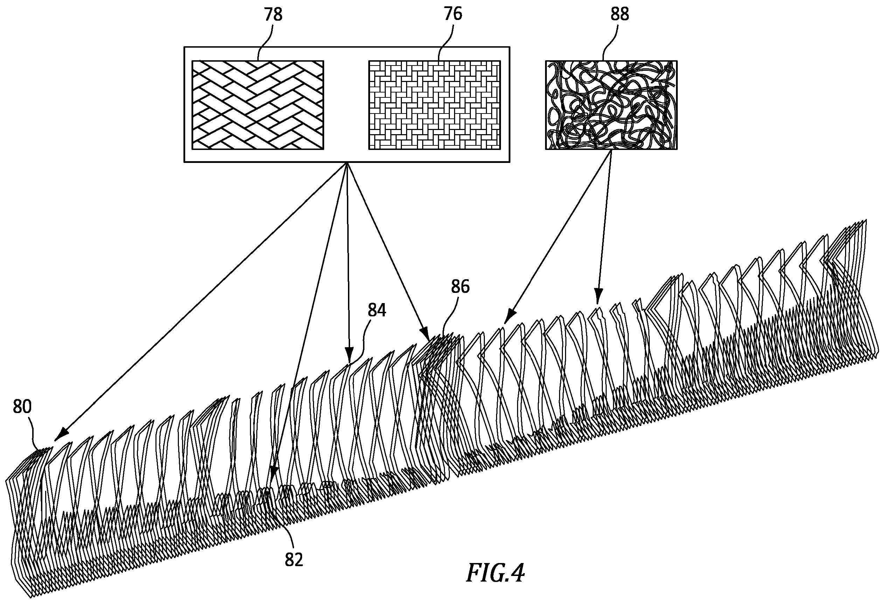

FIG. 4 shows a similar layup to that of FIG. 3, but in this case the layup is toughened to improve robustness of the blade against damage initiation and progression, particularly from delamination at ply interfaces. This is accomplished in this non-limiting configuration by substituting one or more layers of woven 76 or braided 78 material for one or more plies of uniply material, particularly at specific identified locations 80, 82, 84, 86 where the airfoil is in need of additional robustness. The woven or braided material can in some configurations be positioned at or near a surface of the fan blade. The combination of uniply material with portions or layers, or portions of layers, replaced with woven or braided material, for example up to about 10% volume of the structure, can maintain the advantages of uniply material while also enhancing the toughness of the resulting structure, especially against delamination at an interface between plies. Specific locations where reinforcement or substitution with woven/braided plies can be desired are further discussed below.

In the case of a triaxial architecture or braid 78, the braid can be designed or tailored to incorporate different angles, for example 0 degrees plus and minus X degrees, where X can be 30, 45 or 60 degrees, for example. Alternatively, in the case of a weave, the woven fabric is more typically bi-directional. In either case, the weave or braid can be formed from different material tows, and/or fibers or tows having different aerial weights and from different size filament bundles, for example 6k or 12k.

Substitution of one or more woven 76 or braided 78 layers in the layup of the article, for example at locations 80, 82, 84, 86 or the like, helps to improve robustness of the fan blade as desired. Specifically, the contoured surface and added surface area help to create a more robust bond with the adjacent ply. It should also be noted that in some instances it may be desirable to substitute more than one adjacent layer of woven or braided material between plies, and when this is the case, the adjacent woven or braided layers can be nested. To achieve nesting, one can shift a braid from one ply to the next by half a pitch, where pitch is the distance between axial yarns. This nests the peaks of one braid into the valleys of the next, again creating greater bond strength between plies.

Still referring to FIG. 4, another way in which the robustness of the blade can be improved is by providing carbon nano tubes, or toughened carbon nano tubes 88, between plies. These also can be applied at desirable locations 90, 92 in the layup for the fan blade. These nanotubes can be applied in a number of different ways, one non-limiting example of which may be to include them in the matrix or resin material. Other manners of incorporating nanotubes into the matrix will be apparent to those skilled in the art.

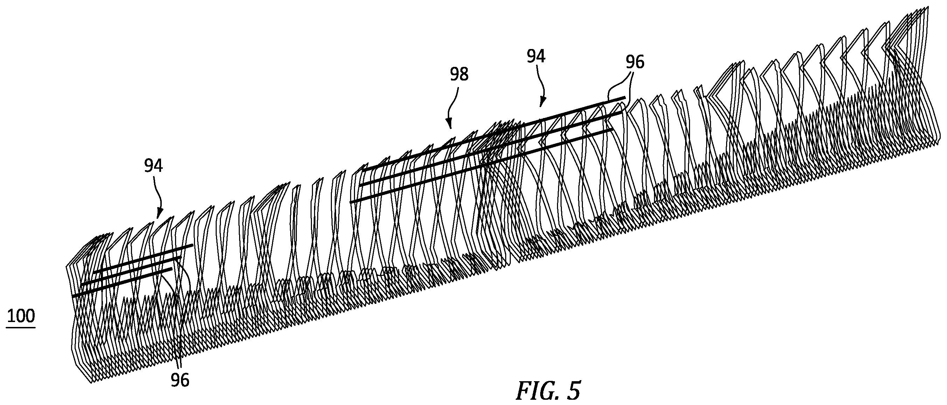

FIG. 5 shows yet another non-limiting configuration for increasing robustness of the OMC fan blade as disclosed herein. In this configuration, a plurality of pins, or z-pins, can be added or inserted to the layup and then formed into the desired structure prior to curing to result in a further strengthened hybrid structure. These pins are referred to as z-pins because they extend generally in the z-direction with respect to the fibers of the ply through which they are positioned. Z-pins, like the other measures disclosed herein, can advantageously be utilized in particular locations of the airfoil or other portions of the fan blade. FIG. 5 shows an array 94 of z-pins 96 at a mid-surface location 98 of the fan blade, and another array 94 at another location 100 near the flow path of the fan blade. It should be appreciated that z-pins 96 could be applied through multiple uniplies in FIG. 5, or could be applied through multiple woven or braided plies as well, or combinations thereof.

It should be appreciated that the lines 96 of FIG. 6 show areas of z-pins. As will be explained further below, z-pins extend generally normal to the surface of the fan blade. Thus, in FIG. 6, lines 96 could be a line pattern of z-pins extending from close to the surface of the fan blade, through the central area of the fan blade, and toward the opposed surface of the fan blade.

FIG. 6 shows a fan blade 58 and shows specific locations 102, 104, 106, 108 and 110 at which z-pins can be useful. Location 108 represents an area where it can be useful to have z-pins or other reinforcement that extends generally across the width of the airfoil of the blade, that is, from leading to trailing edge. Further, this reinforcement can be useful generally closer to the flow path of the fan blade. Thus, such a reinforcement with z-pins or the like could be at a location somewhat less than 50% of the blade span, for example at 10-40% of the blade span, measured from the flow path of the blade.

Locations 104-106 are also areas where zones of reinforcement such as z-pins can usefully be incorporated, as these locations are areas of frequent impact with bird ingestion, typically in a range from 40-80% of the blade span.

Blade tip 102 is another location where z-pins can usefully be added for reinforcement, as this location also is subject to stress during and after foreign objects have struck the fan blade. And one additional location of interest for location of z-pins is along a trailing edge of the fan blade as shown at location 110.

It should be appreciated that z-pins can be incorporated into the layup of a fan blade at any and all of the locations shown in FIG. 6, and in other locations as well, all within the broad scope of this disclosure.

Z-pins can be provided from any suitable material, but one such material is carbon, which can be in a matrix that is consistent and compatible with the matrix of the fan blade. The resulting hybrid composite architecture has desired properties along with enhanced robustness when enduring a bird strike or the like.

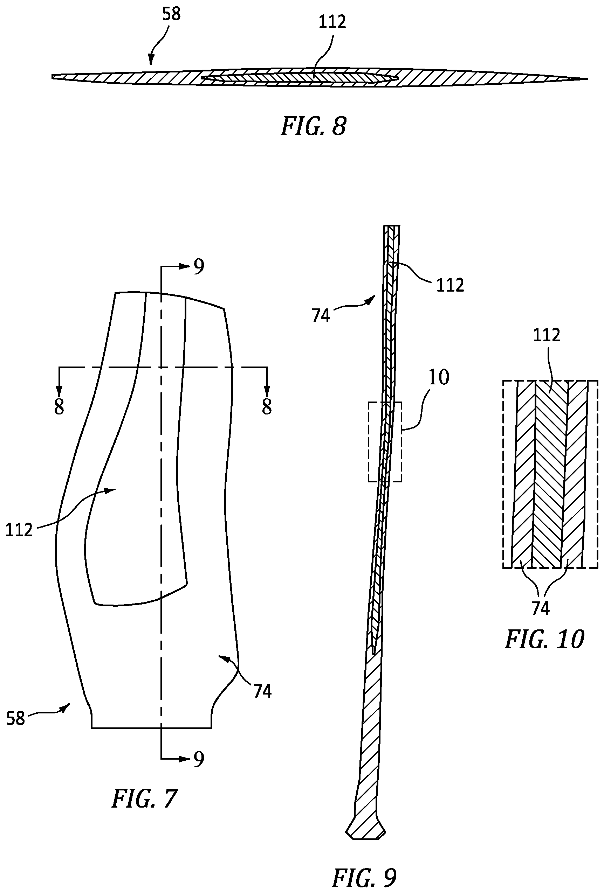

Turning now to FIGS. 7-10, a non-limiting configuration is illustrated wherein a preform 112 is centrally located within a fan blade 58, with uniplies 74 formed around preform 112. FIG. 7 shows the outline of blade 58 with preform 112 shown therein in broken lines. The section views A-A and B-B show further detail of the plies 74 formed around preform 112, including in an enlarged view in FIG. 10.

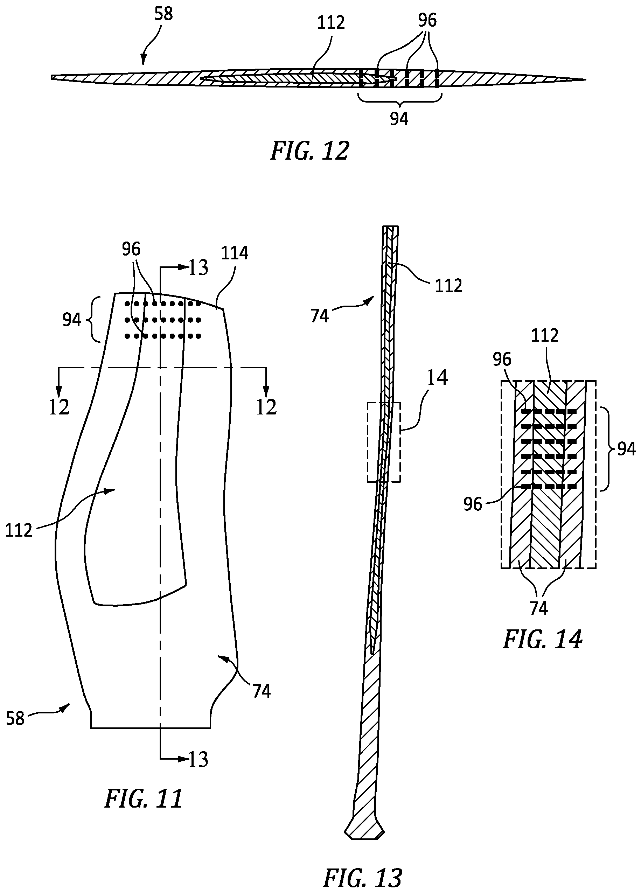

FIGS. 11-14 illustrate similar views to FIGS. 7-10, but in this case with z-pins 96 in accordance with the non-limiting configuration disclosed above. Thus, FIG. 11 shows z-pins 96 in an array 94 near the tip 114 of blade 58. In this view, z-pins 96 extend into the plane of the drawing. In one non-limiting configuration, the z-pins can extend through the thickness of the blade, from a point close to the suction surface to a point close to the pressure surface. FIG. 12, taken along section lines A-A of FIG. 11, shows this configuration, with z-pins 96 extending from side to side of blade 58, and passing through preform 112 as well. In this configuration, z-pins can help increase resistance to delamination of layers of plies 74 as desired. FIG. 13 shows another cross section of blade 58 taken along lines B-B of FIG. 11, and FIG. 14 is an enlarged portion of FIG. 13 to show z-pins 96 in this embodiment also passing through preform 112 and into uniplies 74 on each side of the preform 112.

It should be appreciated that the above disclosure provides a number of alternatives and/or substitutions that can be implemented individually or in combination to enhance the robustness of OMC fan blades as desired. Thus, substitution of woven or braided layers, introduction of nano tubes in some portions of the resin, and implementation of z-pins, each individually and also collectively improve robustness of the resulting fan blade.

The foregoing description is exemplary of the subject matter of the subject matter disclosed herein. Various non-limiting embodiments are disclosed, however, one of ordinary skill in the art would recognize that various modifications and variations in light of the above teachings will fall within the scope of the appended claims. It is therefore to be appreciated that within the scope of the appended claims, the disclosure may be practiced other than as specifically described. Thus, the scope of the present claims is not specifically limited by the details of specific embodiment disclosed herein, but rather the claims define the full and reasonable scope of the disclosure.

## Claims

1. A composite fan blade (58), comprising:
a plurality of uniplies (74) stacked together to define the blade (58); and
at least one braided or woven ply (76, 78) between two plies (74) of the plurality of uniplies (74).

2. A method for making a composite fan blade (58), comprising the steps of:
laying up a plurality of uniplies (74) to define the composite fan blade (58); and
applying at least one braided or woven ply (76, 78) between two plies (74) of the plurality of uniplies (74).

3. The composite fan blade or method of any preceding claim, wherein the at least one braided or woven ply (76, 78) comprises a braided ply (78) having a triaxial architecture.

4. The composite fan blade or method of any preceding claim, wherein the at least one braided or woven ply (76, 78) comprises a woven fabric.

5. The composite fan blade or method of any preceding claim, wherein the at least one braided or woven ply (76, 78) comprises a prepreg braided or woven ply.

6. The composite fan blade or method of any preceding claim, wherein the at least one braided or woven ply (76, 78) comprises a fiber material selected from the group consisting of carbon fiber material, fiberglass material, para-aramid synthetic fiber and combinations thereof.

7. The composite fan blade or method of any preceding claim, wherein a matrix material is in at least some of the uniplies (74) and the at least one braided or woven ply (76, 78), and the matrix material is selected from the group consisting of epoxy, bismaleimide and polyimide.

8. The composite fan blade or method of any preceding claim, wherein the at least one braided or woven ply (76, 78) comprises at least two adjacent braided or woven plies (76, 78), wherein the at least two adjacent braided or woven plies (76, 78) are nested.

9. The composite fan blade or method of any preceding claim, further comprising carbon nano tubes between at least two of the uniplies (74).

10. The composite fan blade or method of claim 9, wherein the carbon nano tubes comprise a portion of a or the matrix material dispersed through the uniplies (74).

11. The composite fan blade or method of any preceding claim, further comprising at least one z-pin (96) extending across at least two of the uniplies (74).

12. The composite fan blade (58) or method of claim 11, wherein the at least one z-pin (96) extends substantially normal to a surface of the composite fan blade (58).

13. The composite fan blade or method of claim 11 or 12, wherein the at least one z-pin (96) comprises carbon.

14. The method of any preceding claim, further comprising a step of incorporating carbon nano tubes between at least two of the uniplies (74).

15. The method of claim 14, wherein the carbon nano tubes comprise a portion of a or the matrix material dispersed through the uniplies (74).
